Europäisches Patentamt

European Patent Office

Office européen des brevets

(11) Numéro de publication: **0 169 793**

**A1**

## (12) DEMANDE DE BREVET EUROPEEN

(21) Numéro de dépôt: **85420138.1**

(22) Date de dépôt: **23.07.85**

(51) Int. Cl.⁴: **G 01 B 3/20**
**G 01 B 3/00**

(30) Priorité: **23.07.84 FR 8411834**

(43) Date de publication de la demande:
**29.01.86 Bulletin 86/5**

(84) Etats contractants désignés:
**AT BE CH DE GB IT LI LU NL SE**

(71) Demandeur: **Sagona, Antoine**
**105, Rue Pierre Corneille**
**F-69003 Lyon(FR)**

(72) Inventeur: **Sagona, Antoine**
**105, Rue Pierre Corneille**
**F-69003 Lyon(FR)**

(74) Mandataire: **Schmitt, John**
**Cabinet John Schmitt 9, rue Pizay**
**F-69001 Lyon(FR)**

(54) **Dispositif pour associer un comparateur à un pied à coulisse ou à une jauge de profondeur.**

(57) L'invention concerne un dispositif permettant d'adapter un comparateur mécanique, ou et électronique à un pied à coulisse ou à une jauge de profondeur.

Ce dispositif comprend une butée réglable (1) en forme d'équerre montée à cheval sur la tranche supérieure de la réglette (7) du pied à coulisse et un support amovible (2) fixé sur la tranche supérieure du curseur (14) et muni de moyens permettant d'adapter le comparateur (3) en position parallèle à la réglette (7) de manière que le palpeur (4) dudit comparateur puisse entrer en contact avec une face verticale (11) de la butée (1) lorsque le curseur (14) est manoeuvré.

Fig-1

- 1 -

Dispositif pour associer un comparateur à un pied à coulisse
ou à une jauge de profondeur.

La présente invention se rapporte au secteur de la métrologie et elle concerne plus particulièrement un dispositif, simple, pratique et rationnel permettant d'adapter un comparateur mécanique, ou électronique à un pied à coulisse ou à une jauge de profondeur aans le but d'augmenter sensiblement la précision de lecture de ces instruments de mesure.

On connait déjà le pied à coulisse à cadran dont la réglette comporte une crémaillère rapportée qui entraîne le mouvement de l'aiguille au moyen de pigons réducteurs quand on déplace le coulisseau le long de ladite réglette pour mesurer la dimension d'une pièce insérée entre les becs de l'instrument. Ce dispositif, bien que procurant une lecture plus sûre et plus rapide, n'offre pas toutes les garanties requises de précision, notamment en cas d'usure de la crémaillère, ou d'introduction d'un corps étranger entre ses dents. D'autre part, la capacité de cet instrument est réduite.

Pour pallier ces inconvénients, on a imaginé, selon l'invention, un support permettant d'associer un comparateur à n'importe quel pied à coulisse ordinaire de moyenne ou grande capacité, ou à n'importe quelle jauge de profondeur, même s'ils sont usagés.

Sous une forme de réalisation préférentielle de l'invention, le dispositif dont il s'agit comprend une butée réglable en forme d'équerre montée à cheval sur la tranche supérieure de la réglette graduée du pied à coulisse et un support mobile adapté sur la tranche supérieure du curseur coulissant sur la réglette et muni de moyens permettant de fixer un comparateur de manière que son palpeur puisse entrer en contact avec la butée d'équerre lorsque l'utilisateur manoeuvre le coulisseau.

Suivant une caractéristique de l'invention, l'équerre réglable montée à cheval sur la tranche supérieure de la réglette du pied à coulisse, comporte deux mâchoires qui enserrent les faces latérales de ladite réglette et une vis de serrage à tête moletée, l'une des mâchoires comprenant une partie verticale s'élevant perpendiculairement à partir de la tranche de la réglette.

Suivant une autre caractéristique de l'invention, le support mobile adapté au curseur du pied à coulisse, comporte deux mâchoires qui enserrent les faces latérales de la tranche supérieure dudit curseur et une vis de serrage à tête moletée, l'une des mâchoires supportant une deuxième paire de mâchoires s'étendant horizontalement au-dessus des précédentes et serrant la semelle en queue d'aronde du comparateur dont le cadran est ainsi disposé parallèlement à la réglette graduée du pied à coulisse et dont le palpeur est situé face à la partie verticale de l'équerre réglable montée à cheval sur ladite réglette.

Suivant une autre caractéristique de l'invention, les mâchoires fixant le comparateur au support mobile sur le coulisseau, comporte chacune une empreinte angulaire permettant d'adapter un comparateur équipé d'une tige de fixation.

Suivant une autre caractéristique de l'invention, on substitue à la vis de blocage du curseur du pied à coulisse une vis creuse dans laquelle est introduite une tige poussée par un écrou moleté de manière que son autre extrémité prenne appui sur la barrette de freinage dudit curseur.

Suivant une autre caractéristique de l'invention, une came en forme de coin est engagée sur la vis creuse et, par la manoeuvre d'un écrou moleté, prend appui contre une partie de l'une des mâchoires du support du comparateur pour le faire avancer à l'encontre de l'équerre mobile dans un but de réglage, tandis qu'une lame ressort rappelle le support en sens inverse.

Suivant une autre caractéristique de l'invention, le support de comparateur comporte, fixée à l'une de ses mâchoires, une fourchette dont les branches s'étendent latéralement vers l'équerre montée sur la réglette du pied à coulisse, pour en assurer le guidage correct pendant le réglage contre le palpeur du comparateur, au moyen d'un ergot latéral de ladite équerre.

L'invention est exposée ci-après plus en détail à l'aide des dessins représentant seulement un mode d'exécution.

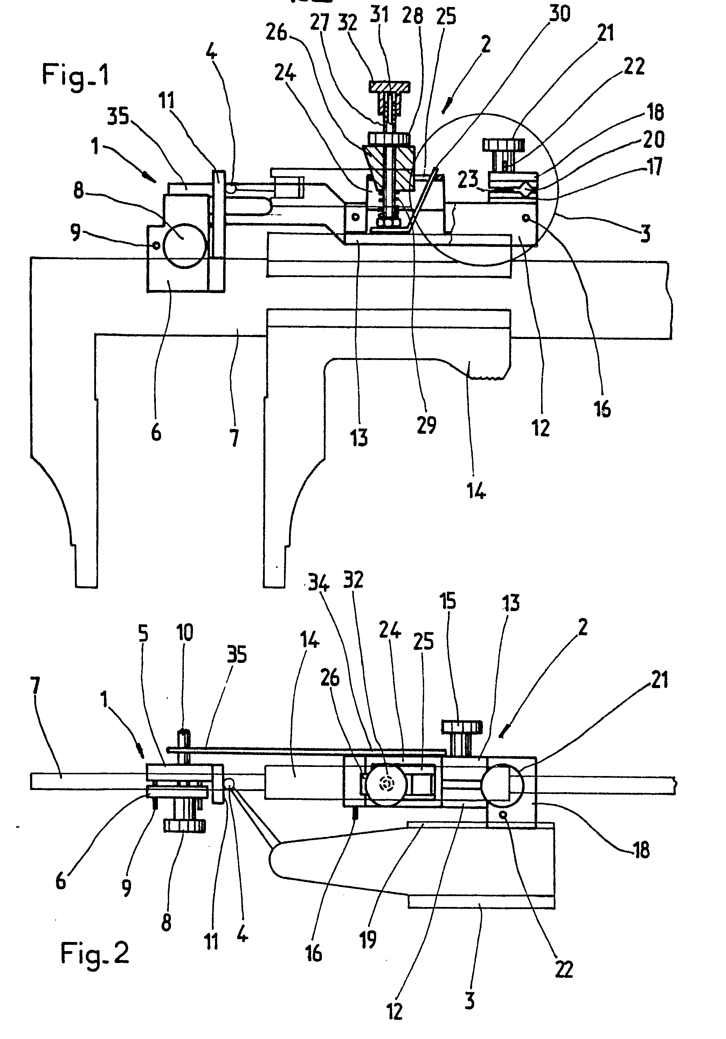

La figure 1 est une vue en élévation d'un pied à coulisse équipé du dispositif objet de l'invention.

La figure 2 en est une vue par-dessus.

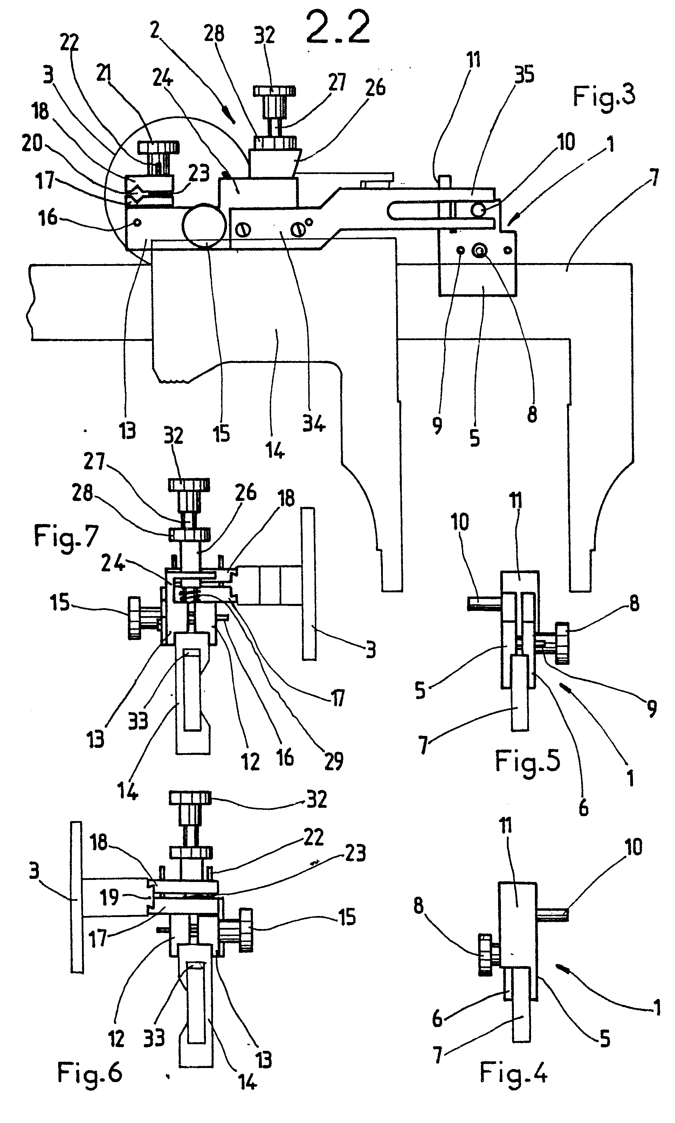

La figure 3 est une vue en élévation par derrière.

Les figures 4 et 5 sont des vues de côté droite et gauche de la butée réglable.

Les figures 6 et 7 sont des vues de côté droite et gauche du support de comparateur.

Sur les dessins, le repère 1 désigne la butée réglable en général, tandis que le repère 2 désigne le support mobile en général comportant un comparateur mécanique 3 de type connu, avec son palpeur 4.

La butée réglable 1 comprend deux mâchoires 5 et 6 formant un embrèvement destiné à chevaucher la réglette 7 d'un pied à coulisse. Ces deux mâchoires sont serrées sur la réglette au moyen d'une vis 8 à tête moletée et sont guidées l'une à l'encontre de l'autre par deux doigts 9 qui s'étendent horizontalement à partir de la mâchoire 5 qui comporte, en outre, un ergot latéral 10. La mâchoire 5 forme une équerre avec une face verticale 11 qui s'élève perpendiculairement au-dessus de la tranche de la réglette 7 du pied à coulisse.

Le support mobile 2 comprend deux mâchoires 12 et 13 formant entre elles un embrèvement destiné à chevaucher la tranche supérieure du curseur 14 coulissant sur la réglette 7 du pied à coulisse. Ces deux mâchoires sont serrées sur le curseur 14 au moyen d'une vis 15 à tête moletée et sont guidées l'une vers l'autre par deux doigts 16.

L'une des mâchoires, notamment celle 12, forme une autre mâchoire d'une seconde paire de mâchoires 17,18 destinée à fixer le comparateur 3. Ces mâchoires forment latéralement un embrèvement en queue d'aronde destinée à serrer la semelle 19 de forme correspondante du comparateur 3 qui se trouve ainsi disposé parallèlement au support en général 2, son palpeur 4 dirigé vers la face 11 de la butée réglable 1.

Les deux mâchoires 17, 18 fixant le comparateur 3, sont aussi découpées par deux empreintes angulaires 20 en vis à vis et disposées perpendiculairement à l'embrèvement retenant la semelle 19 en queue d'aronde du comparateur 3. Ces empreintes 20 permettent de fixer un autre type de comparateur équipé d'une tige cylindrique.

Les deux mâchoires 17 et 18 fixant le comparateur 3 sont serrées au moyen d'une vis 21 à tête moletée et guidées l'une vers l'autre par deux doigts 22 à l'encontre d'un ressort 23 engagé sur la vis 21.

L'autre mâchoire 13 du support mobile 2 en général, forme une cornière 24 dont la face supérieure horizontale est découpée par une fenêtre rectangulaire 25 dans laquelle est introduite une came en coin 26 engagée sur une vis creuse 27 s'étendant verticalement à partir du curseur 14 du pied à coulisse dans la tranche duquel il prend écrou. La came 26 est manoeuvrée au moyen d'un écrou moleté 28 à l'encontre d'un ressort 29 engagé sur la vis creuse 27.

La vis creuse 27 retient aussi une lame ressort 30 qui prend appui contre l'un des côtés de la fenêtre 25, tandis que contre l'autre côté prend appui la face en biais de la came 26.

A l'intérieur de la vis creuse 27 est engagée une tige 31 qui, sous l'action d'un écrou moleté 32 vissé sur ladite vis creuse 27, prend appui contre la barrette de freinage 33 du curseur 14. Il va de soi que la vis creuse 27 est substituée à celle habituelle de blocage du curseur 14.

Contre la face latérale de la mâchoire 13 du support mobile 2 en général, est fixée une fourchette 34 qui s'étend parallèlement à la réglette 7 du pied à coulisse et en direction de la butée réglable 1 de manière que son ergot 10 soit en contact avec l'une des branches 35 de ladite fourchette et empêche la butée 1 de s'échapper pendant son réglage.

Le fonctionnement du dispositif a lieu de la façon suivante :

Lorsque l'on veut obtenir, par exemple d'une pièce à usiner, une cote précise au 0,01 de m/m, il convient de vérifier la cote au moyen d'une cale, voire d'un gabarit intro-

0169793

- 5 -

duit entre les deux becs de pied à coulisse.

Au moyen de la vis moletée 32 le curseur 14 est bloqué sur la réglette 7, puis la butée réglable 1 est amenée en contact avec l'extrémité du palpeur 4 du comparateur par une approche rapide puis bloquée à l'aide de la vis moletée 8.

La mise à zéro du comparateur 3 est réalisée soit à l'aide de son cadran, soit au moyen de l'écrou moleté 28 après que les deux mâchoires 12, 13 du support mobile 2 aient été desserrées au moyen de la vis moletée 15. En manoeuvrant ledit écrou 28 dans le sens du vissage, la came 26 s'enfonce dans la fenêtre 25 en faisant coulisser le support mobile 2 sur le curseur 14 de sorte que le palpeur 4 du comparateur est manoeuvré par la butée réglable 1. Lorsque l'aiguille du comparateur 3 a atteint le zéro, il suffit de bloquer le support mobile 2 sur la curseur 14 du pied à coulisse.

En desserrant le bouton moleté 32, le curseur 14 est rendu mobile sur la réglette 7 de sorte que l'on peut le manoeuvrer pour amener son bec contre la pièce à mesurer jusqu'à obtenir le zéro au comparateur. On obtient alors la cote précise au 0,01 m/m.

Ce dispositif s'applique aussi à une jauge de profondeur.

A cet effet, le support mobile 2 est adapté à la réglette de la jauge de profondeur au moyen de ses mâchoires 12 et 13 montées à cheval sur la tranche de ladite réglette et serré par sa vis moletée 15.

La butée réglable 1 est alors constituée par le curseur habituel de la jauge de profondeur dont une des faces peut-être dressée pour obtenir un contact précis du palpeur 4 du comparateur 3 porté par le support 2.

D'autres applications de ce dispositif peuvent être envisagées pour associer un comparateur à des instruments de mesure analogues.

Des modifications de détails peuvent aussi être apportées au dispositif qui vient d'être décrit pour le simplifier, notamment en supprimant la fourchette 33 et la came 26 sans pour autant s'écarter du cadre de l'invention.

Revendications

1 - Dispositif pour associer un comparateur mécanique ou électronique à un pied à coulisse, caractérisé par le fait qu'il comprend une butée réglable (1) en forme d'équerre montée à cheval sur la tranche supérieure de la réglette (7) du pied à coulisse et un support amovible (2) fixé sur la tranche supérieure du curseur (14) et muni de moyens permettant d'adapter le comparateur (3) en position parallèle à la réglette (7) de manière que le palpeur (4) dudit comparateur puisse entrer en contact avec une face verticale (11) de la butée (1) lorsque le curseur (14) est manoeuvré.

2 - Dispositif suivant la revendication 1, pour associer un comparateur mécanique ou électronique à une jauge de profondeur, caractérisé par le fait que le support amovible (2) comportant le comparateur (3) est monté à cheval sur la tranche de la réglette de la jauge pour être déplacé en direction du curseur dont une face dressée sert de butée au palpeur (4).

3 - Dispositif suivant la revendication 1, caractérisé par le fait que la butée réglable (1) comporte deux mâchoires (5,6) qui enserrent les faces de la réglette (7) du pied à coulisse au moyen d'une vis de serrage (8) à tête moletée.

4 - Dispositif suivant les revendications 1 et 2, caractérisé par le fait que le support amovible (2) comporte deux mâchoires (12,13) qui enserrent les faces latérales du curseur (14) au moyen d'une vis de serrage (15) à tête moletée.

5 - Dispositif suivant les revendications 1, 2 et 4, caractérisé par le fait que le support amovible (2) comporte une seconde paire de mâchoires (17,18) s'étendant horizontalement et perpendiculairement aux précédentes (12,13) pour serrer la semelle (19) du comparateur (3) au moyen d'une vis (21) à tête moletée.

6 - Dispositif suivant la revendication 5, caractérisé par le fait que les mâchoires (17,18) du support (2) sont creusées d'empreintes angulaires (20) disposées en vis à vis pour recevoir la tige cylindrique d'un comparateur analogue (3).

7 - Dispositif suivant la revendication 1, caractérisé par le fait qu'une vis creuse (27) est prévue à la place de la place de la vis de blocage du curseur (14) et dans laquelle est introduite une tige (31) prenant appui contre la barrette (33) de freinage dudit curseur (14) sous l'action d'un écrou moleté (32) vissé en bout de ladite vis creuse.

8 - Dispositif suivant les revendications 1 et 7, caractérisé par le fait que sur la vis creuse (27) est engagée une came en coin (26) manoeuvrée par un écrou moleté (28) à l'encontre d'un ressort (29) pour faire avancer le support (2) en direction de la butée (1) ou le rappeler en sens inverse au moyen d'une lame ressort (30).

9 - Dispositif suivant les revendications 1, 3, 4 et 5, caractérisé par le fait que les mâchoires (5,6,12,13,17,18) sont guidées par paire l'une vers l'autre au moyen de doigts (9,16,22).

10 - Dispositif suivant la revendication 1, caractérisé par le fait que le support (2) comporte, fixée à l'une de ses mâchoires (13), une fourchette (34) dont l'une des branches (35) coopère avec un ergot latéral (10) de la butée réglable (1) pour en assurer le guidage.

Fig.1

Fig.2

0169793

0169793

Fig.3

Fig.7

Fig.5

Fig.6

Fig.4

Office européen
des brevets

**RAPPORT DE RECHERCHE EUROPEENNE**

## DOCUMENTS CONSIDERES COMME PERTINENTS

| Catégorie | Citation du document avec indication en cas de besoin des parties pertinentes | Revendication concernee | CLASSEMENT DE LA DEMANDE (Int Cl 4) |
|---|---|---|---|
| X | US-A-2 924 017 (G.E. SORENSEN) <br> * Titre; figures 1,2,4,5-9; colonne 3, ligne 70 - colonne 4, ligne 61; colonne 5, lignes 23-68 * <br> --- | 1-5 | G 01 B 3/20 <br> G 01 B 3/00 |
| A | US-A-2 447 612 (L.H. DOWE) <br> * Figures 1-7; ensemble du brevet * <br> --- | 1,2,4, 5 | |
| A | CH-A- 246 288 (A. BENZ) <br> * Figures 1-3; page 1, lignes 29-48 * <br> ----- | 6 | |

DOMAINES TECHNIQUES RECHERCHES (Int. Cl.4)

G 01 B 3/00

Le present rapport de recherche a ete etabli pour toutes les revendications

| Lieu de la recherche | Date d'achèvement de la recherche | Examinateur |
|---|---|---|
| LA HAYE | 30-08-1985 | VISSER F.P.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet anterieur, mais publié à la date de depôt ou apres cette date
D : cité dans la demande
L : cité pour d'autres raisons

& : membre de la même famille, document correspondant